(19) Europäisches Patentamt / European Patent Office / Office européen des brevets

(11) **EP 4 395 197 A1**

(12) **EUROPEAN PATENT APPLICATION**
published in accordance with Art. 153(4) EPC

(43) Date of publication:
**03.07.2024   Bulletin 2024/27**

(21) Application number: **22894361.9**

(22) Date of filing: **19.08.2022**

(51) International Patent Classification (IPC):
**H04B 7/06** $^{(2006.01)}$

(52) Cooperative Patent Classification (CPC):
**H04B 7/06**; Y02D 30/70

(86) International application number:
**PCT/CN2022/113557**

(87) International publication number:
**WO 2023/087819 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.11.2021   CN 202111399156**

(71) Applicants:
• **ZTE Corporation**
  **Shenzhen, Guangdong  518057 (CN)**
• **Tsinghua University**
  **Beijing 100084 (CN)**

(72) Inventors:
• **DAI, Linglong**
  **Shenzhen, Guangdong 518057 (CN)**
• **ZHAO, Yajun**
  **Shenzhen, Guangdong 518057 (CN)**
• **YU, Guanghui**
  **Shenzhen, Guangdong 518057 (CN)**
• **DUAN, Xiangyang**
  **Shenzhen, Guangdong 518057 (CN)**

(74) Representative: **Regimbeau**
  **20, rue de Chazelles**
  **75847 Paris Cedex 17 (FR)**

(54) **BEAM TRAINING METHOD, FIRST NODE, SECOND NODE, COMMUNICATION SYSTEM, AND MEDIUM**

(57)    Provided are a beam training method, a first node, a second node, a communication system, and a medium. In this method, the near-field code word of each of multiple sampling point pairs is constructed according to the array response vector of the near-field cascaded channel of a reconfigurable intelligent surface, RIS. Each sampling point pair includes one first sampling point and one second sampling point. The first sampling point is a candidate location of a scatterer between a first node and the RIS. The second sampling point is a candidate location of a scatterer between the RIS and a second node. A training symbol is sent through the RIS according to the near-field code word of each sampling point pair. Feedback information is received. The feedback information includes the information of an optimal beam.

**EP 4 395 197 A1**

Construct a near-field code word of each sampling point pair according to an array response vector of a near-field cascaded channel of an RIS, where each sampling point pair includes one first sampling point and one second sampling point, the first sampling point is a candidate location of a scatterer between a first node and the RIS, and the second sampling point is the candidate location of a scatterer between the RIS and a second node — 110

Send a training symbol through the RIS according to the near-field code word of each sampling point pair — 120

Receive feedback information, the feedback information includes the information of an optimal beam — 130

**FIG. 1**

**Description**

TECHNICAL FIELD

The present application relates to the field of wireless communication network technology, for example, a beam training method, a first node, a second node, a communication system, and a medium.

BACKGROUND

A reconfigurable intelligent surface (RIS) may implement intelligent adjustment and control of a wireless communication environment through a large number of controllable units. In general, the RIS may be deployed between a base station and a user to provide an additional reflection link to assist communication. Through reasonable adjustment and control of a large number of RIS units, the RIS can provide a high reflected beam gain at low costs and power consumption. This effective reflection beamforming requires accurate channel state information (CSI). The CSI may be acquired by beam training. Beam training may be understood as performing a training process between a base station and a user through multiple directivity beams to find an optimal beam. These directivity beams are also referred to as code words. Multiple code words together form a codebook. In the related art, a beam training codebook is based on a far-field channel model.

However, from an RIS to an ultra-large-scale RIS, the increase in the number of units (for example, from 256 to 1024) may result in an extremely large array size, which causes a change in the structure of an electromagnetic wave field, that is, scatterers are basically in the near-field range of the ultra-large-scale RIS. A beam training codebook based on the far-field channel model may cause a serious performance loss in near-field communication assisted by the ultra-large-scale RIS.

SUMMARY

The present application provides a beam training method, a first node, a second node, a communication system, and a medium.

Embodiments of the present application provide a beam training method. The method includes the following operations.

A near-field code word of each of multiple sampling point pairs is constructed according to an array response vector of a near-field cascaded channel of an RIS. Each sampling point pair includes one first sampling point and one second sampling point. The first sampling point is a candidate location of a scatterer between a first node and the RIS. The second sampling point is a candidate location of a scatterer between the RIS and a second node.

A training symbol is sent through the RIS according to the near-field code word of each sampling point pair.

Feedback information is received. The feedback information includes the information of an optimal beam.

The embodiments of the present application further provide a beam training method. The method includes the following operations.

In the current search phase, a near-field code word of each of multiple sampling point pairs is constructed according to an array response vector of a near-field cascaded channel of the RIS. Each sampling point pair includes one first sampling point and one second sampling point in the current sampling range. The first sampling point is a candidate location of a scatterer between a first node and the RIS. The second sampling point is a candidate location of a scatterer between the RIS and a second node.

A training symbol is sent through the RIS according to the near-field code word of each sampling point pair.

Feedback information is received. The feedback information includes information of the optimal beam in the current sampling range.

The current sampling range is updated according to the information of the optimal beam, and the next search phase is entered. The method returns to performing the operation of constructing the near-field code word of each of the multiple sampling point pairs until a search stop condition of the optimal beam is satisfied.

The embodiments of the present application further provide a beam training method. The method includes the following operations.

A training symbol is received through an RIS, where a training symbol is sent according to the near-field code word of each sampling point pair in a sampling range. The near-field code word is constructed according to the array response vector of the near-field cascaded channel of the RIS. Each sampling point pair includes one first sampling point and one second sampling point. The first sampling point is a candidate location of a scatterer between a first node and the RIS. The second sampling point is a candidate location of a scatterer between the RIS and a second node.

The optimal beam is determined according to received energy of the training symbol.

The feedback information is sent. The feedback information includes information of the optimal beam in the sampling range.

The embodiments of the present application further provide a first node. The first node includes a memory, a processor, and a computer program stored on the memory and executable on the processor. When executing the program, the processor performs the preceding beam training method.

The embodiments of the present application further provide a second node. The second node includes a memory, a processor, and a computer program stored on the memory and executable on the processor. When executing the program, the processor performs the preceding beam training method.

The embodiments of the present application further provide a communication system. The communication system includes an RIS, a first node as provided in the embodiments of the present application, and a second node as provided in the embodiments of the present application.

The embodiments of the present application further provide a computer-readable storage medium. The computer-readable storage medium stores a computer program. When executing the program, a processor performs the preceding beam training method.

BRIEF DESCRIPTION OF DRAWINGS

FIG. 1 is a flowchart of a beam training method according to an embodiment.

FIG. 2 is a diagram of a communication system assisted by an ultra-large-scale RIS according to an embodiment.

FIG. 3 is a diagram of implementation of an ultra-large-scale RIS near-field codebook construction and beam training method according to an embodiment.

FIG. 4 is a flowchart of another beam training method according to an embodiment.

FIG. 5 is a diagram of a near-field codebook and a grading near-field codebook according to an embodiment.

FIG. 6 is a diagram of the comparison of system achievable rate performance between a near-field codebook and a grading near-field codebook according to an embodiment.

FIG. 7 is a diagram of the comparison of beam training overheads between a near-field codebook and a grading near-field codebook according to an embodiment.

FIG. 8 is a diagram of implementation of a grading near-field codebook construction and grading beam training method according to an embodiment.

FIG. 9 is a flowchart of another beam training method according to an embodiment.

FIG. 10 is a diagram illustrating the structure of a beam training apparatus according to an embodiment.

FIG. 11 is a diagram illustrating the structure of another beam training apparatus according to an embodiment.

FIG. 12 is a diagram illustrating the structure of another beam training apparatus according to an embodiment.

FIG. 13 is a diagram illustrating the hardware structure of a first node according to an embodiment.

FIG. 14 is a diagram illustrating the hardware structure of a second node according to an embodiment.

FIG. 15 is a diagram illustrating the structure of a communication system according to an embodiment.

DETAILED DESCRIPTION

The present application is described hereinafter in conjunction with drawings and embodiments. It is to be understood that the embodiments described herein are intended to explain the present application and not to limit the present application. It is to be noted that if not in collision, the embodiments of the present application and features therein may be combined with each other in any manner. Additionally, it is to be noted that for ease of description, only part, not all, of structures related to the present application are illustrated in the drawings.

CSI acquisition may include two types of methods. One is explicit CSI acquisition, that is, channel estimation. The other is implicit CSI acquisition, that is, beam training. In the first type of method, a base station sends a pilot to a user through an RIS, and the user performs channel estimation based on the received pilot. Since an RIS unit is usually passive, it is generally possible to estimate only a cascaded channel composed of two channel segments, including the base station to the RIS and the RIS to the user. Compared with a channel dimension from a base station to a user in a system without an RIS, the dimension of the cascaded channel increases multiplicatively. For example, when the number of RIS units is 256, the dimension of the cascaded channel increases by 256 times compared with the original dimension. The estimation of a high-dimensional cascaded channel results in huge pilot overheads. For such an explicit CSI acquisition method, since the RIS does not perform effective reflection beamforming before channel estimation, the reception signal-to-noise ratio is generally very low. At a relatively low reception signal-to-noise ratio, it is difficult for channel estimation to achieve satisfactory estimation performance.

The second type of method is beam training. In this embodiment, a beam training method is used to construct a codebook and find the optimal beam. In this process, the physical angle of a channel path rather than the entire channel may be estimated. Beam training refers to performing a training process between a base station and a user through multiple directivity beams to find an optimal beam. These directivity beams are also referred to as code words and are pre-defined in the codebook used for beam training. After beam training, the physical angle of the channel path may be obtained equivalently. Compared with channel estimation, beam training may directly implement effective beamforming, thereby avoiding estimation of the entire channel at a relatively low reception signal-to-noise ratio. Beam training is combined in an RIS-assisted communication system to acquire the CSI. The core idea is that based on a cascaded array response vector of a cascaded channel of the RIS, a codebook including multiple RIS directivity beams (that is, code words) may be designed first, and then a training process is performed between the RIS and a user to find an optimal RIS directivity beam. Considering that the cascaded array response vector of the RIS is mainly determined by an angle difference on the RIS side, a beam training scheme based on partial searching may be used to reduce search complexity.

However, as the number of RIS units increases, an RIS-assisted system faces a serious "multiplicative fading" link loss, that is, the equivalent link loss of the base station-RIS-user reflection link depends on the product of the link losses of two links from the base station to the RIS and from the RIS to the user. Thanks to the advantages of low costs and low power consumption of the RIS, the RIS is more likely to develop into an ultra-large-scale RIS in the future to acquire a high gain to compensate for the serious link loss. From an RIS to an ultra-large-scale RIS, it not only means an increase in the number of RIS units, but may also cause a change in the structure of the electromagnetic wave field. The field structure of electromagnetic waves is divided into a near field and a far field. The demarcation line between the near field and the far field may be determined by a Rayleigh distance. The Rayleigh distance is proportional to the square of an array size. In the RIS-assisted system, if the array size is not very large, the Rayleigh distance is relatively small, and scatterers are generally assumed to be distributed in the far-field range of the RIS, a beam training codebook is based on a far-field channel model. From the RIS to the ultra-large-scale RIS, as the number of units increases (for example, from 256 to 1024), the array size of the ultra-large-scale RIS becomes extremely large, and the Rayleigh distance also increases. The scatterers are more likely to be in the near-field range of the ultra-large-scale RIS. Thus, the beam training codebook based on the far-field channel model may cause a serious performance loss in near-field communication assisted by the ultra-large-scale RIS.

In an embodiment of the present application, a beam training method is provided. The method can implement ultra-large-scale RIS near-field codebook design and beam training based on a near-field channel model and improve RIS-assisted near-field communication performance. On this basis, ultra-large-scale RIS grading near-field codebook design and a grading beam training method are further proposed to reduce beam training overheads.

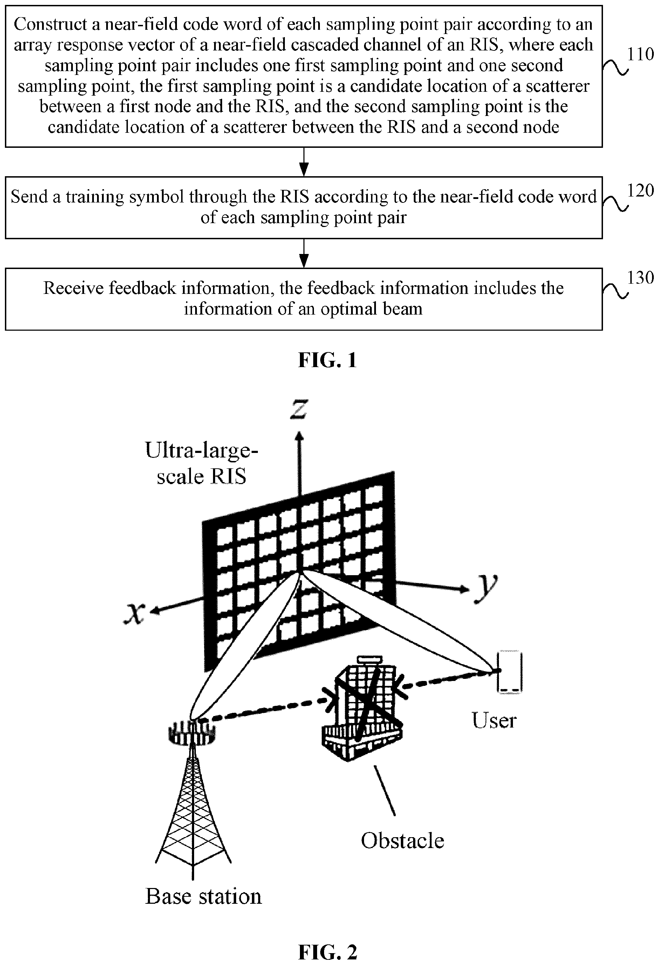

FIG. 1 is a flowchart of a beam training method according to an embodiment. The method may be applied to a first node (for example, a base station). As shown in FIG. 1, the method provided in this embodiment includes 110, 120, and 130.

In 110, a near-field code word of each sampling point pair is constructed according to an array response vector of a near-field cascaded channel of an RIS. Each sampling point pair includes one first sampling point and one second sampling point. The first sampling point is a candidate location of a scatterer between the first node and the RIS. The second sampling point is a candidate location of a scatterer between the RIS and a second node.

In this embodiment, the first node and the second node may be understood as communication nodes used for data communication. For example, the first node may be a base station, and the second node may be a user equipment (UE). In this embodiment, description is given by using an example in which the first node is the base station, and the second node is the user equipment.

In this embodiment, a reconfigurable intelligent surface, that is, an RIS, may be understood as an intelligent supermaterial surface structure having a special function. The RIS may be an ultra-large-scale RIS. A cascaded channel may refer to a cascaded channel composed of two channel segments, a channel from the base station to the RIS and a channel from the RIS to a user. The near-field cascaded channel may be understood as a cascaded channel in a near-field range of the RIS. The array response vector may be used to characterize the response capability of an RIS array antenna to waves coming from a certain direction.

The RIS may be generally deployed between the base station and the user equipment. The RIS may provide an additional reflection link to the base station and the user equipment for assisted communication. Scatterers exist between the base station and the RIS and between the RIS and the user equipment. The scatterers may refer to structures causing an offset of the spatial propagation trajectory of an electromagnetic wave. A scatterer may correspond to one spatial location, and the spatial location may be represented by a three-dimensional coordinate.

Each sampling point pair may consist of one first sampling point and one second sampling point. The first sampling point may be the candidate location of the scatterer between the first node and the RIS. There may be multiple first sampling points. The second sampling point is the candidate location of the scatterer between the RIS and the second node. There may be multiple second sampling points. For example, multiple spatial locations may be included between the first node (that is, the base station) and the RIS and used as candidate locations of scatterers. The first sampling points may be the three-dimensional coordinates corresponding to the candidate locations. Multiple spatial locations may be included between the RIS and the second node (that is, the user equipment) and used as candidate locations of scatterers. The second sampling points may be the three-dimensional coordinates corresponding to the candidate locations.

The first node (that is, the base station) may construct the near-field code word of each sampling point pair according to the array response vector of the near-field cascaded channel of the RIS. Each near-field code word may depend on the sum of the distance between the first sampling point and the RIS and the distance between the second sampling point and the RIS. One sampling point pair may correspondingly construct one near-field code word. The near-field code words corresponding to different sampling point pairs may be the same or different.

In 120, a training symbol is sent through the RIS according to the near-field code word of each sampling point pair.

In this embodiment, the training symbol may be understood as a transmission symbol used for beam training. The first node (that is, the base station) may send the training symbol to the second node (that is, the user equipment) according to the near-field code word of each sampling point pair, that is, the RIS is controlled to use a corresponding directivity beam. The second node may receive multiple training symbols and record the training symbol having the highest received energy to determine an optimal beam (that is, an optimal near-field code word) and feed back information such as an index, an identifier, or a near-field code word of the optimal beam to the first node.

In 130, feedback information is received. The feedback information includes information of the optimal beam.

In this embodiment, multiple directivity beams (the directivity beams may also be referred to as code words) used for communication may be included between the first node and the second node. The optimal beam may be understood as an optimal directivity beam among the multiple directivity beams, that is, an optimal near-field code word of multiple near-field code words. The information of the optimal beam may refer to the near-field code word subscript corresponding to the optimal beam. For example, after receiving the training symbol, the second node performs corresponding processing and returns the feedback information obtained by processing to the first node. The first node receives the feedback information, that is, the information of the optimal beam, returned by the second node.

In an embodiment, after operation 110, the method further includes the following operations.

In 112, a codebook is constructed according to the near-field code word of each sampling point pair. The codebook includes multiple non-repeated near-field code words.

In this embodiment, the codebook may be understood as a set of multiple near-field code words. Different sampling point pairs may be constructed into the same near-field code word. The codebook includes multiple non-repeated near-field code words, that is, the near-field code words included in the codebook are different from one another. Thus, after one near-field code word is constructed for each sampling point pair, the near-field code word may be compared with all near-field code words included in the current codebook first. If the current codebook does not include this near-field code word, the near-field code word may be added to the codebook. If the current codebook includes the near-field code word, the near-field code word may not be added to the codebook. On this basis, the determination of the next near-field code word is continued until the near-field code words of all the sampling point pairs are determined.

In an embodiment, before operation 110, the method further includes the following operations.

In 101, a first sampling point set and a second sampling point set are determined. The first sampling point set includes multiple first sampling points. The second sampling point set includes multiple second sampling points.

In this embodiment, the first sampling point set may refer to a set composed of multiple first sampling points, and the second sampling point set may refer to a set composed of multiple second sampling points. For example, a channel consists of main paths, a sampling range is determined in the range of a channel (that is, a main path) between the first node and the RIS, and a sampling range is determined in the range of a channel (that is, a main path) between the RIS and the second node. Sampling is performed in the two sampling ranges to obtain multiple first sampling points and multiple second sampling points and the corresponding first sampling point set and the corresponding second sampling point set are formed. It is to be noted that a sampling range may be set according to actual situations, and a sampling manner may be equally spaced sampling or non-uniform sampling, which is not limited in this embodiment.

In an embodiment, operation 101 includes the following.

In 1011, a sampling range is sampled according to a set sampling step size to obtain the first sampling point set and the second sampling point set.

In this embodiment, the first node may sample the sampling range according to a preset sampling step size, that is, the set sampling step size, to obtain the corresponding first sampling point set and the corresponding second sampling point set.

In an embodiment, the near-field code word of each sampling point pair is associated with the sum of the distance between the first sampling point and the RIS and the distance between the second sampling point and the RIS.

In this embodiment, each of the first sampling point and the second sampling point in each sampling point pair corresponds to one spatial location. The near-field code word of each sampling point pair is determined according to the sum of the distance from the spatial location of the first sampling point to the RIS and the distance from the spatial location of the second sampling point to the RIS.

In an embodiment, operation 120 includes the following.

In 1210, the near-field code word of each sampling point pair is traversed. The reflection coefficient of the RIS is set to the currently traversed near-field code word. The training symbol is sent through the RIS based on the reflection coefficient.

In this embodiment, the first node traverses the near-field code word of each sampling point pair and sets the reflection coefficient of the RIS to the currently traversed near-field code word, and on this basis, the training symbol is sent to the second node through the RIS based on the reflection coefficient. In this manner, the second node receives the training symbol sent according to each near-field code word and determines the optimal beam.

Beam training is illustratively described below through different embodiments.

In this embodiment of the present application, for a communication system assisted by an ultra-large-scale RIS, a near-field codebook design and a beam training method are proposed. FIG. 2 is a diagram of a communication system assisted by an ultra-large-scale RIS according to an embodiment. As shown in FIG. 2, it is assumed that a base station (that is, the first node) of M antennas communicates with a single-antenna user (that is, the second node) with assistance from an ultra-large-scale RIS, the direct link between the base station and the user is blocked by an obstacle, and the ultra-large-scale RIS provides a reflection link for the base station. The ultra-large-scale RIS is placed on the $x$-$z$ plane and includes a total of $N_1 \times N_2$ RIS units. The center of the ultra-large-scale RIS is located at the origin of the $x$-$y$-$z$ three-dimensional coordinate system.

When downlink transmission is considered, and the base station sends a signal s to the user through the ultra-large-scale RIS, the received signal r on the user side may be represented as: $r = \mathbf{h}_r^T \mathrm{diag}(\boldsymbol{\theta})\mathbf{G}vs + \mathrm{n}$.

$\mathbf{v} \in \mathbf{C}^{M \times 1}$ denotes a beamforming vector on the base station side. $\mathbf{G} \in \mathbf{C}^{N \times M}$ denotes a channel matrix from the base station to the ultra-large-scale RIS. $\theta \in \mathbf{C}^{N \times 1}$ denotes the reflection coefficient set of the ultra-large-scale RIS multiplying the reflection beamforming vector. $\mathbf{h}_r \in \mathbf{C}^{N \times 1}$ denotes a channel from the user to the ultra-large-scale RIS. n denotes Gaussian white noise, where the average value of the Gaussian white noise is 0, and the variance of the Gaussian white noise is $\sigma^2$. Considering that a channel is often composed of main paths (or minority paths), especially in a high-frequency scenario of a millimeter wave or terahertz, a channel in this embodiment is considered to be composed of main paths, and the purpose of beam training is to align the beams with the main paths. Since the channel $\mathbf{G}$ between the base station and the ultra-large-scale RIS may not change for a long time after they are deployed at the corresponding fixed locations, only the beam training on the ultra-large-scale RIS side may be considered, and the beams on the base station side are assumed to be aligned with the main paths.

Since the array size of the ultra-large-scale RIS is relatively large, scatterers are more likely to be in the near-field range. Thus, the near-field channel model may be used to model the channels on the ultra-large-scale RIS side, and the near-field channel model is as follows:

$$\mathbf{G} = \alpha_G \mathbf{c}(x_G, y_G, z_G)\mathbf{b}^T(\phi_G);$$

$$\mathbf{h}_r = \alpha_r \mathbf{c}(x_r, y_r, z_r).$$

$\alpha_G$ and $\alpha_r$ denote path gains. $(x_G, y_G, z_G)$ and $(x_r, y_r, z_r)$ respectively denote the coordinate of the scatterer corresponding to the main path between the base station and the ultra-large-scale RIS and the coordinate of the scatterer corresponding to the main path between the ultra-large-scale RIS and the user. $\phi_G$ denotes a beam sending angle on the base station side. It is to be noted that the base station still uses the far-field channel model for modeling. $\mathbf{b}(\phi_G) \in \mathbf{C}^{M \times 1}$ denotes a far-field array response vector. $c(x, y, z) \in \mathbf{C}^{N \times 1}$ denotes a near-field array response vector. It is to be understood that for ease of description, the distance and the coordinate parameter described below are normalized by the carrier wavelength. The horizontal or vertical distance between two RIS units is set to d, then the coordinate of an $(n_1, n_2)^{th}$ RIS unit in the *x-y-z* three-dimensional coordinate system may be represented as:

$$\big((n_1 - (N_1 + 1)/2)d, 0, (n_2 - (N_1 + 1)/2)d\big).$$

$n_1$ = 1,2 ... $N_2$, and $n_2$ = 1,2 ... $N_2$. The near-field array response vectors $\mathbf{c}(x_G, y_G, z_G)$ and $\mathbf{c}(x_r, y_r, z_r)$ may be represented as follows:

$$\mathbf{c}(x_G, y_G, z_G) = \big[e^{-j2\pi D_G(1,1)}, \dots, e^{-j2\pi D_G(1,N_2)}, \dots, e^{-j2\pi D_G(N_1,1)}, \dots, e^{-j2\pi D_G(N_1,N_2)}\big]^T;$$

$$\mathbf{c}(x_r, y_r, z_r) = \big[e^{-j2\pi D_{Gr}(1,1)}, \dots, e^{-j2\pi D_r(1,N_2)}, \dots, e^{-j2\pi D_r(N_1,1)}, \dots, e^{-j2\pi D_r(N_1,N_2)}\big]^T.$$

$$D_G(n_1, n_2) = \sqrt{(x_G - (n_1 - (N_1 + 1)/2)d)^2 + y_G^2 + (z_G - (n_2 - (N_2 + 1)/2)d)^2}$$

denotes the distance from the scatterer between the base station and the ultra-large-scale RIS to the $(n_1, n_2)^{th}$ RIS unit.

$$D_r(n_1, n_2) = \sqrt{(x_r - (n_1 - (N_1 + 1)/2)d)^2 + y_r^2 + (z_r - (n_2 - (N_2 + 1)/2)d)^2}$$

denotes the distance from the scatterer between the ultra-large-scale RIS and the user to the $(n_1, n_2)^{th}$ RIS unit. $(x_G, y_G, z_G)$ and $(x_r, y_r, z_r)$ satisfy:

$$X_{min}^G \leq x_G \leq X_{max}^G, Y_{min}^G \leq y_G \leq Y_{max}^G, Z_{min}^G \leq z_G \leq Z_{max}^G;$$

$$X_{min}^r \leq x_r \leq X_{max}^r, Y_{min}^r \leq y_r \leq Y_{max}^r, Z_{min}^r \leq z_r \leq Z_{max}^r.$$

Considering that the beamforming is completed on the base station side, that is, v = $\mathbf{b}^*/\sqrt{M}$ , the preceding signal receiving model may be transformed into:

$$r = \mathbf{\theta}^T \overline{\mathbf{h}} \overline{s} + \mathrm{n}.$$

$\overline{\mathbf{h}} = \alpha \overline{\mathbf{c}}((x_G, y_G, z_G), (x_r, y_r, z_r)) \in \mathbf{C}^{N \times 1}$ denotes a near-field cascaded channel of an ultra-large-scale RIS. $\alpha = \alpha_G \alpha_r$ denotes an equivalent path gain. $\overline{\mathbf{c}}(x_G, y_G, z_G), (x_r, y_r, z_r)) \in \mathbf{C}^{N \times 1}$ denotes an array response vector of a cascaded channel. $\overline{s} = \mathbf{b}^T(\phi_G)\mathbf{v}s$ denotes the equivalent sending signal on the base station side. The specific form of $\overline{\mathbf{c}}((x_G, y_G, z_G), (x_r, y_r, z_r))$ may be represented as follows:

$$\overline{\mathbf{c}}\big((x_G, y_G, z_G), (x_r, y_r, z_r)\big) = \big[e^{-j2\pi D(1,1)}, \dots, e^{-j2\pi D(1,N_2)}, \dots, e^{-j2\pi D(N_1,1)}, \dots, e^{-j2\pi D(N_1,N_2)}\big]^T.$$

$D(n_1, n_2) = D_G(n_1, n_2) + D_r(n_1, n_2)$ denotes the equivalent distance of the array response vector of the near-field cascaded channel.

The purpose of ultra-large-scale RIS beam training is to find an appropriate code word for θ so that the received energy of the signal is maximum. Prior to this, a near-field codebook may be constructed based on the array response vector of the near-field cascaded channel to match the near-field channel model.

In this embodiment, the process of constructing the near-field codebook is as follows.

The entire sampling range considered is sampled according to a certain sampling step size (that is, the set step size), $\Delta = \big[\Delta_x^G, \Delta_y^G, \Delta_z^G, \Delta_x^r, \Delta_y^r, \Delta_z^r\big]$ , and two sampling point sets $\Phi^G$ and $\Phi^r$ (that is, the first sampling point set and the second sampling point set) are generated, which may be represented as:

$$\Phi^G = \left\{ (x_s^G, y_s^G, z_s^G) | x_s^G = X_{min}^G, X_{min}^G + \Delta_x^G, \cdots, X_{max}^G; y_s^G = Y_{min}^G, Y_{min}^G + \Delta_y^G, \cdots, Y_{max}^G; z_s^G = Z_{min}^G, Z_{min}^G + \Delta_z^G, \cdots, Z_{max}^G \right\};$$

$$\Phi^r = \left\{ (x_s^r, y_s^r, z_s^r) | x_s^r = X_{min}^r, X_{min}^r + \Delta_x^r, \cdots, X_{max}^r; y_s^r = Y_{min}^r, Y_{min}^r + \Delta_y^r, \cdots, Y_{max}^r; z_s^r = Z_{min}^r, Z_{min}^r + \Delta_z^r, \cdots, Z_{max}^r \right\}.$$

$\Phi^G$ and $\Phi^r$ are traversed. Each time, a sampling point (that is, a first sampling point and a second sampling point) is separately taken from each of the two sampling point sets to form a sampling point pair, and a near-field code word is constructed according to the following formula:

$$\overline{\mathbf{c}} \left( \left( x_s^G, y_s^G, z_s^G \right), \left( x_s^r, y_s^r, z_s^r \right) \right) = \left[ e^{-j2\pi D(1,1)}, \cdots, e^{-j2\pi D(1,N_2)}, \cdots, e^{-j2\pi D(N_1,1)}, \cdots, e^{-j2\pi D(N_1,N_2)} \right]^H.$$

$$D_s(n_1, n_2) = D_s^G(n_1, n_2) + D_s^r(n_1, n_2)$$ , and $D_s^G(n_1, n_2)$ and $D_s^r(n_1, n_2)$ are respectively represented as follows:

$$D_s^G(n_1, n_2) = \sqrt{(x_s^G - (n_1 - (N_1 + 1)/2)d)^2 + \left(y_s^G\right)^2 + (z_s^G - (n_2 - (N_2 + 1)/2)d)^2};$$

$$D_s^r(n_1, n_2) = \sqrt{(x_s^r - (n_1 - (N_1 + 1)/2)d)^2 + \left(y_s^r\right)^2 + (z_s^r - (n_2 - (N_2 + 1)/2)d)^2}.$$

It is to be noted that different sampling point pairs may generate the same near-field code word. Thus, during the traversal process, each newly generated near-field code word needs to be different from all previously generated near-field code words before it can be added to the codebook. On this basis, the near-field codebook $\mathbf{W} \in \mathbf{C}^{N \times L}$ may be obtained according to all the retained near-field code words. Each column in the near-field codebook may represent a near-field code word. $L$ may represent a total of $L$ code words.

Based on the constructed near-field codebook, this embodiment proposes a near-field beam training scheme, that is, a training process is performed between the ultra-large-scale RIS and the user to perform a traversal search on the near-field codebook $\mathbf{W}$. This process includes $L$ slots in total. In an $l^{th}$ slot ($l \in L$), the reflection coefficient of the ultra-large-scale RIS is set to be equal to an $l^{th}$ code word in the near-field codebook. The base station sends a training symbol to the user through the ultra-large-scale RIS. The user receives the training symbol and records a code word corresponding to a training symbol having the maximum energy in the currently received training symbols. Finally, the user feeds back the optimal code word subscript (that is, information of the optimal beam) to the base station through the ultra-large-scale RIS.

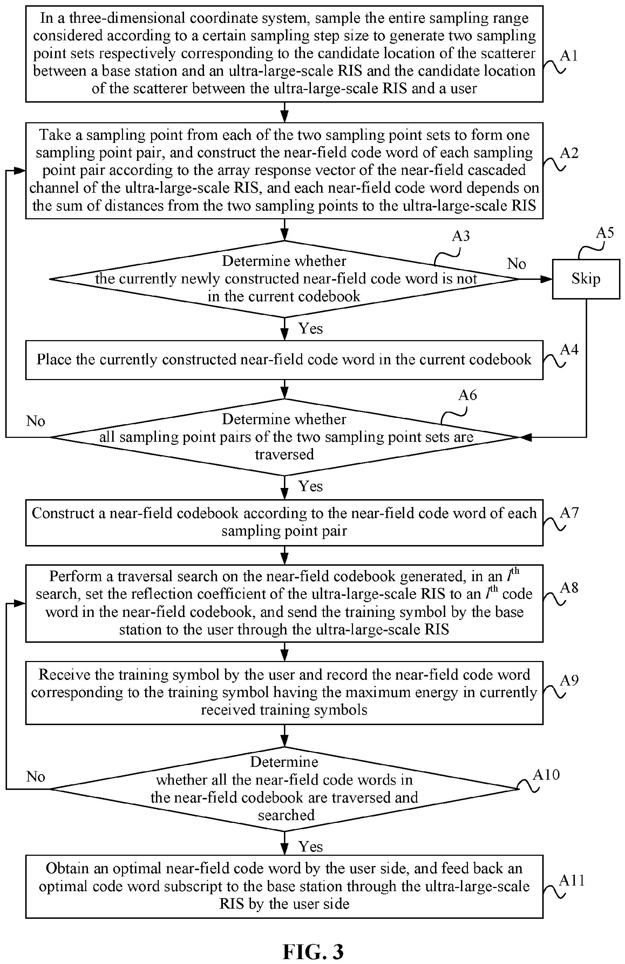

In this embodiment, an ultra-large-scale RIS near-field codebook construction and beam training method are provided. FIG. 3 is a diagram of the implementation of an ultra-large-scale RIS near-field codebook construction and beam training method according to an embodiment. As shown in FIG. 3, the implementation process of this method is below.

In A1, in the *x-y-z* three-dimensional coordinate system, the entire sampling range considered is sampled according to the certain sampling step size (that is, the set step size), and two sampling point sets $\Phi^G$ and $\Phi^r$ (that is, the first sampling point set and the second sampling point set) are generated. The two sampling point sets correspond to the candidate locations of the scatterer between the base station and the ultra-large-scale RIS and the candidate locations of the scatterer between the ultra-large-scale RIS and the user, respectively.

In A2, a sampling point (that is, a first sampling point and a second sampling point) is separately taken from each of the two sampling point sets $\Phi^G$ and $\Phi^r$ to form a set of sampling point pairs. The near-field code word of each sampling point pair is constructed according to the array response vector of the near-field cascaded channel of the ultra-large-scale RIS. Each near-field code word depends on the sum of distances from the two sampling points to the ultra-large-scale RIS (that is, the near-field code word of each sampling point pair is associated with the sum of the distance between the first sampling point and the RIS and the distance between the second sampling point and the RIS).

In A3, whether the currently newly constructed near-field code word is not in the current codebook is determined.

A4 is performed based on the determination result that the currently newly constructed near-field code word is not in the current codebook. A5 is performed based on the determination result that the currently newly constructed near-field code word is in the current codebook, and it continues to determine whether the next near-field code word is in the current codebook.

In A4, the currently constructed near-field code word is placed in the current codebook.

In A5, skip.

In A6, whether all sampling point pairs from the two sampling point sets are traversed is determined. A7 is performed based on the determination result that all sampling point pairs from the two sampling point sets are traversed. A2 is returned based on the determination result that all sampling point pairs of the two sampling point sets are not traversed.

In A7, the near-field codebook is constructed according to the near-field code word of each sampling point pair.

In A8, a traversal search is performed on the near-field codebook generated in A7. In an $l^{th}$ search, the reflection coefficient of the ultra-large-scale RIS is set to an $l^{th}$ code word (that is, the near-field code word currently traversal searched) in the near-field codebook, and the base station sends the training symbol to the user through the ultra-large-scale RIS.

In A9, the user receives the training symbol and records the near-field code word corresponding to the training symbol having the maximum energy in currently received training symbols.

In A10, it is determined whether all the near-field code words in the near-field codebook are traversed and searched. A11 is performed based on the determination result that all the near-field code words in the near-field codebook are traversed and searched. A8 is returned based on the determination result that not all the near-field code words in the near-field codebook are traversed and searched until all the near-field code words in the near-field codebook are traversed.

In A11, the user side may obtain the optimal near-field code word, and the user side feeds back the optimal code word subscript to the base station through the ultra-large-scale RIS.

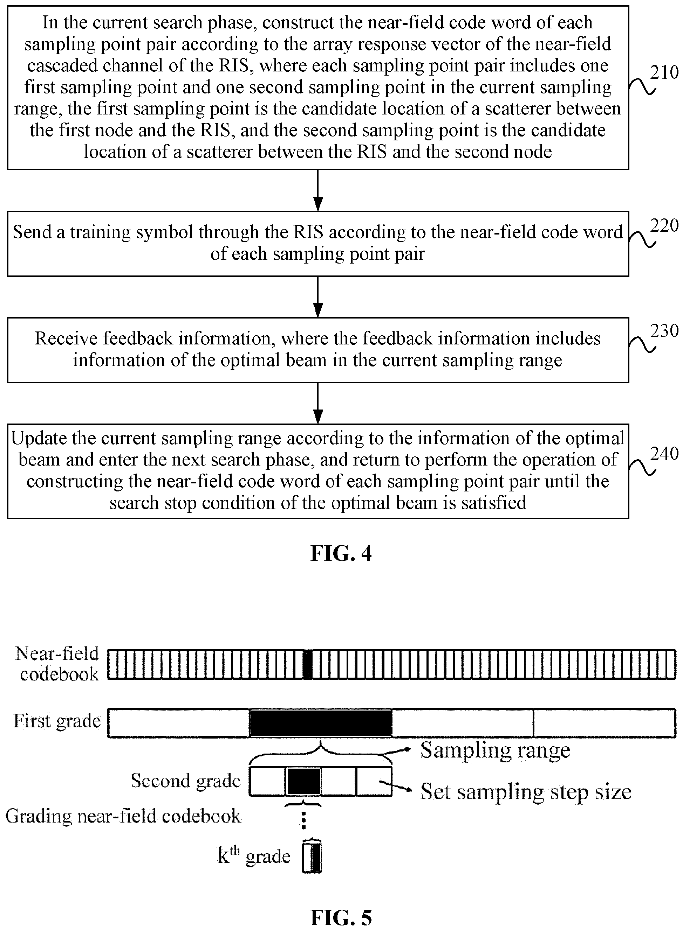

The embodiments of the present application further provide a beam training method. FIG. 4 is a flowchart of another beam training method according to an embodiment. As shown in FIG. 4, the method is applied to the first node (for example, the base station). The method provided in this embodiment includes 210 to 240.

In this embodiment, grading beam training is performed on the constructed near-field codebook. For example, the beam training process of the constructed codebook is graded, that is, the beam training process is graded into multiple search phases. The search phase of each grade traverses a corresponding sub-codebook to search for an optimal code word. The search phase of each grade corresponds to a different sub-codebook and accordingly corresponds to a different sampling range and sampling step size. Based on the sampling range and sampling step size for the search phase of the previous grade, the sampling range and sampling step size of the search phase of each grade may be centered on the near-field code word corresponding to the optimal beam in the current search phase and may be reduced accordingly according to a set proportion.

In 210, in the current search phase, the near-field code word of each sampling point pair is constructed according to the array response vector of the near-field cascaded channel of the RIS. Each sampling point pair includes one first sampling point and one second sampling point in the current sampling range. The first sampling point is a candidate location of a scatterer between the first node and the RIS. The second sampling point is a candidate location of a scatterer between the RIS and the second node.

In this embodiment, the first node constructs the near-field code word of each sampling point pair according to the array response vector of the near-field cascaded channel of the RIS in the current search phase.

In 220, a training symbol is sent through the RIS according to the near-field code word of each sampling point pair.

In this embodiment, the first node sends the training symbol to the second node through the RIS according to the near-field code word of each sampling point pair.

In 230, the feedback information is received. The feedback information includes information of the optimal beam in the current sampling range.

In this embodiment, the first node receives the feedback information returned by the second node through the RIS. The feedback information includes the information of the optimal beam in the current sampling range of the current search phase.

In 240, the current sampling range is updated according to the information of the optimal beam, and the next search phase is entered. The operation of constructing the near-field code word of each sampling point pair is returned until the search stop condition of the optimal beam is satisfied.

In this embodiment, after the first node receives the feedback information, the information of the optimal beam (that is, the near-field code word corresponding to the optimal beam) included in the feedback information in the current sampling range is used as the center, and the distances from the front and back boundaries to the center are each the set proportion of the currently set sampling step size, for example, one half, accordingly, the range determined according to the center and the front and back boundaries is the updated current sampling range. On this basis, the updated current sampling range is used as the sampling range of the next search phase. At this time, the current set step size of the set proportion (the range of the set proportion is greater than 0 and less than 1, and the specific value may be flexibly set according to actual situations) is used as the set sampling step size of the next search phase. The next search phase is entered. The method returns to performing the operation of constructing the near-field code word of each sampling point pair until the search stop condition of the optimal beam is satisfied. The search stop condition may be understood as a condition of performing a grading search on the constructed near-field codebook until the grading search is completed and the optimal beam is obtained.

In an embodiment, operation 240 includes the following.

In 2410, the current sampling range is set to be centered on the near-field code word corresponding to the optimal beam. The distance from the front boundary to the center and the distance from the back boundary to the center are both one half of the set sampling step size of the current search phase.

In this embodiment, in the current search phase, the current sampling range is updated in the following manner according to the information of the optimal beam: The first node sets the current sampling range to be centered on the near-field code word corresponding to the optimal beam. Each of the distances from the front and back boundaries to the center is one half of the set sampling step size of the current search phase.

In an embodiment, before operation 210, the method further includes the following operation.

In 201, a first sampling point set and a second sampling point set in the current sampling range are determined. The first sampling point set includes multiple first sampling points. The second sampling point set includes multiple second sampling points.

In an embodiment, operation 201 includes the following.

In 2011, the current sampling range is sampled according to the set sampling step size of the current search phase to obtain the first sampling point set and the second sampling point set.

In an embodiment, after the current sampling range is updated according to the information of the optimal beam, and before the method returns to performing the operation of constructing the near-field code word of each sampling point pair, the method also includes the following.

In 241, the set sampling step size of the current search phase is reduced according to a set proportion, and the reduced set sampling step size is used as the set sampling step size of the next search phase.

In this embodiment, it is to be understood that in a case where the sampling range of the next search phase gradually decreases, that is, the sampling range of the next search phase is less than the sampling range of the current search phase, the set sampling step size of the next search phase may be set to be less than the set sampling step size of the current search phase, so the range of the set proportion may be greater than 0 and less than 1. For example, after the current sampling range is updated according to the information of the optimal beam, the set sampling step size of the current search phase is reduced according to the set proportion, and the reduced set sampling step size is used as the set sampling step size of the next search phase.

In an embodiment, after operation 210, the method includes the following operations.

In 211, a codebook corresponding to the current sampling range is constructed according to the near-field code word of each sampling point pair in the current sampling range.

In an embodiment, the near-field code word of each sampling point pair is associated with the sum of the distance between the first sampling point and the RIS and the distance between the second sampling point and the RIS in the current sampling range.

In an embodiment, operation 220 includes the following.

In 2210, the near-field code word of each sampling point pair in the current sampling range is traversed. The reflection coefficient of the RIS is set to the currently traversed near-field code word. The training symbol is sent through the RIS based on the reflection coefficient.

A grading beam training method is illustratively described below through different embodiments.

In the preceding embodiments, a near-field beam training method based on a traversal search may cause relatively large beam training overheads. To avoid this case, this embodiment further proposes a grading near-field codebook and a corresponding grading beam training method. The implementation process is as follows.

FIG. 5 is a diagram of a near-field codebook and a grading near-field codebook according to an embodiment. As shown in FIG. 5, in the grading beam training method, the entire beam training process may be divided into K grades of search phases. An optimal beam traversal search is performed on the corresponding sub-codebook at each grade. The sampling ranges and set sampling step sizes of sub-codebooks corresponding to search phases of different grades gradually decrease. The sampling range of the first grade sub-codebook is consistent with the sampling range of the near-field      codebook      in      the      preceding      embodiments,      that      is:

$$R_1 = \{[X_{min}^G, X_{max}^G], [Y_{min}^G, Y_{max}^G], [Z_{min}^G, Z_{max}^G], [X_{min}^r, X_{max}^r], [Y_{min}^r, Y_{max}^r], [Z_{min}^r, Z_{max}^r]\}$$ . The set sampling step size $\Delta_1$ is set to $A\Delta$, where $A$ is a scalar greater than 1.

Then, in a $k$th phase, two sampling point sets $\Phi_k^G$ and $\Phi_k^r$ are generated according to the sampling range and set sampling step size of the current search phase first. Based on this, the corresponding $k$th grade sub-codebook $\mathbf{W}_k$ is generated according to the near-field codebook construction method in the preceding embodiments, and then a traversal search is performed on $\mathbf{W}_k$ to obtain the optimal near-field code word corresponding to the $k$th grade sub-codebook, that is, the optimal near-field code word in the current search phase $k$, which may be represented as $\overline{\mathbf{c}}_{s,k}^{opt}\left(\left(x_{s,k}^{G,opt}, y_{s,k}^{G,opt}, z_{s,k}^{G,opt}\right), \left(x_{s,k}^{r,opt}, y_{s,k}^{r,opt}, z_{s,k}^{r,opt}\right)\right)$. Based on the optimal near-field code word obtained in the $k$th grade search phase, the sampling range of a $(k+1)$th grade (that is, the search phase of the next grade) is updated. For example, $\left[X_{min}^{G,k+1}, X_{max}^{G,k+1}\right]$ represents the sampling range of the $(k+1)$th grade search phase.

$$\left[X_{min}^{G,k+1}, X_{max}^{G,k+1}\right] = \left[x_{s,k}^{G,opt} - \Delta_x^{G,k}/2, x_{s,k}^{G,opt} + \Delta_x^{G,k}/2\right]$$

$\Delta_x^{G,k}$ denotes the set sampling step size of the $k$th grade. At the same time, the set sampling step size may be updated to $\delta$ ($0 < \delta < 1$) times the set sampling step size of the $k$th grade, that is, $\Delta_{k+1} = \delta\Delta_k$ is used as the set sampling step size of the $(k+1)$th grade search phase. After the $k$th grade search phase is completed, the user may use the optimal near-field code word subscript searched in the $k$th grade sub-codebook as the feedback information and feed back the optimal near-field code word subscript to the base station through the RIS. Through the preceding method, the size of the sub-codebook of each grade of the grading codebook may be much smaller than the size of the near-field codebook. Thus, compared with beam training based on the traversal search, grading beam training can greatly reduce beam training overheads.

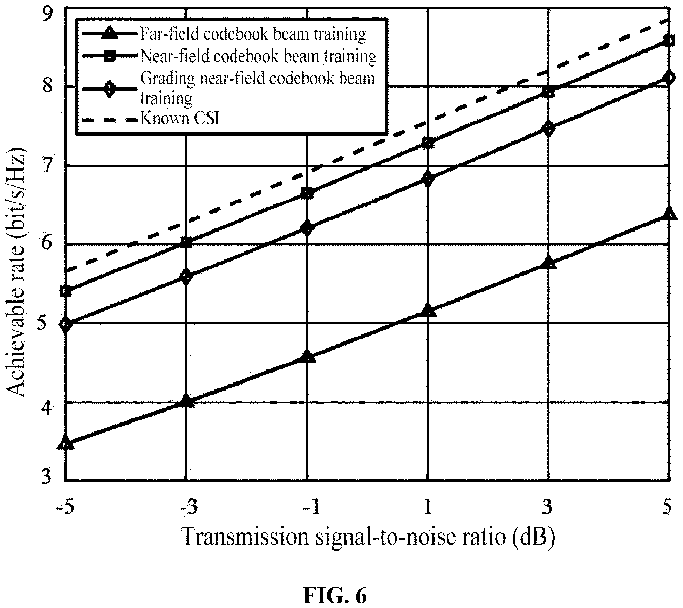

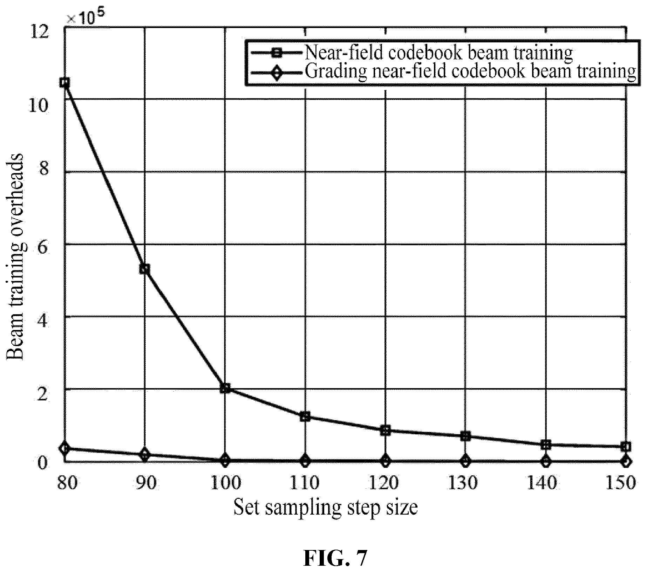

FIG. 6 is a diagram illustrating the comparison of system achievable rate performance between a near-field codebook and a grading near-field codebook according to an embodiment. FIG. 7 is a diagram illustrating the comparison of beam training overheads between a near-field codebook and a grading near-field codebook according to an embodiment. As shown in FIG. 6, compared with far-field beam training, the construction and corresponding beam training method of two near-field codebooks (that is, the near-field codebook and the grading near-field codebook) provided by the embodiments of the present application can achieve better system achievable rate performance in the ultra-large-scale RIS-assisted near-field communication. It can be seen that compared with the far-field codebook beam training in the related art, the near-field codebook beam training proposed in this embodiment may greatly improve the system achievable rate performance by about 50%. On this basis, to reduce the beam training overheads, this embodiment further proposes a grading near-field codebook and a grading search method to reduce the sampling range and the sampling step size of the search grade by grade. As shown in FIG. 7, the beam training overheads of the grading near-field codebook are much smaller than that of the near-field codebook. Compared with the near-field codebook traversal search, the near-field beam training overheads of the grading near-field codebook can be significantly reduced by about 90%.

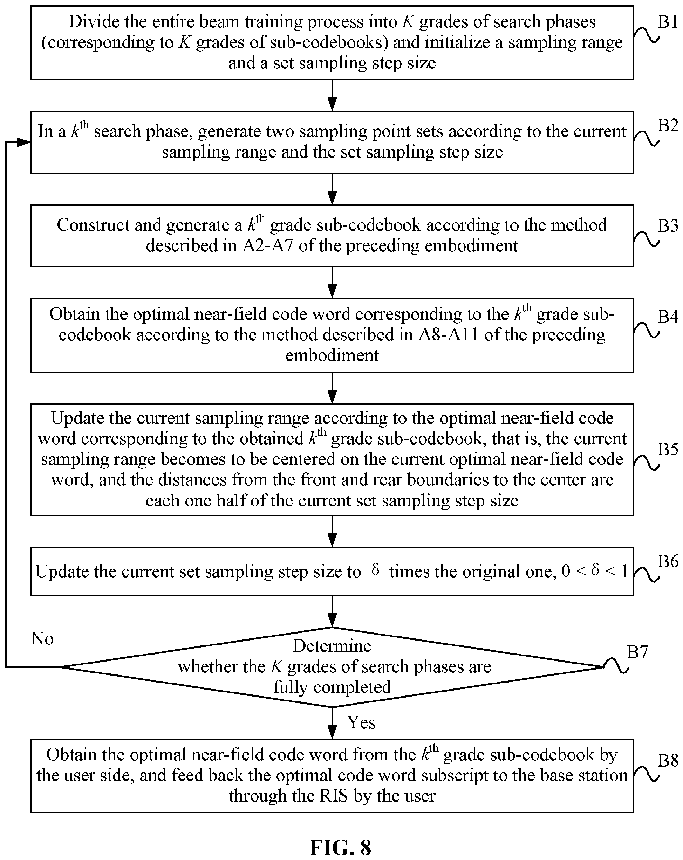

In this embodiment, an ultra-large-scale RIS grading near-field codebook construction and a corresponding grading beam training method are provided. FIG. 8 is a diagram of the implementation of a grading near-field codebook construction and a grading beam training method according to an embodiment. As shown in FIG. 8, the implementation process of this method is below.

In B1, the entire beam training process is divided into $K$ grades of search phases (corresponding to $K$ grades of sub-codebooks), and a sampling range (that is, the sampling range of the first-grade search phase is set to be the entire sampling range of the near-field codebook in the preceding embodiments) and a set sampling step size (it is to be understood that the set sampling step size of the first-grade search phase may be set to a relatively large value) are initialized.

In B2, in a $k$th search phase, two sampling point sets $\Phi_k^G$ and $\Phi_k^r$ are generated according to the current sampling range and the set sampling step size.

In B3, a $k$th grade sub-codebook is constructed and generated according to the method described in A2 to A7 in the preceding embodiment (which is not described in detail here).

In B4, the optimal near-field code word corresponding to the $k$th grade sub-codebook is obtained according to the method described in A8 to A11 in the preceding embodiment (which is not described in detail here).

In B5, the current sampling range is updated according to the optimal near-field code word corresponding to the $k$th grade sub-codebook obtained in B4, that is, the current sampling range becomes centered on the current optimal near-field code word, and the distances from the front and rear boundaries to the center are each one half of the current set sampling step size (that is, the current sampling range is set to be centered on the near-field code word corresponding to the current optimal beam, and the distance from the front boundary to the center and the distance from the back boundary to the center are each one half of the set sampling step size of the current search phase).

In B6, the current set sampling step size is updated to $\delta$ times the original one, and $0 < \delta < 1$.

In B7, it is determined whether the $K$ grades of search phases are fully completed. B8 is performed based on the determination result that the $K$ grades of search phases are fully completed. B2 is returned based on the determination result that the $K$ grades of search phases are not fully completed until the $K$-grades search is completed.

In B8, the user side may obtain the optimal near-field code word from a $k^{th}$ grade sub-codebook, and the user feeds back the optimal code word subscript to the base station through the RIS.

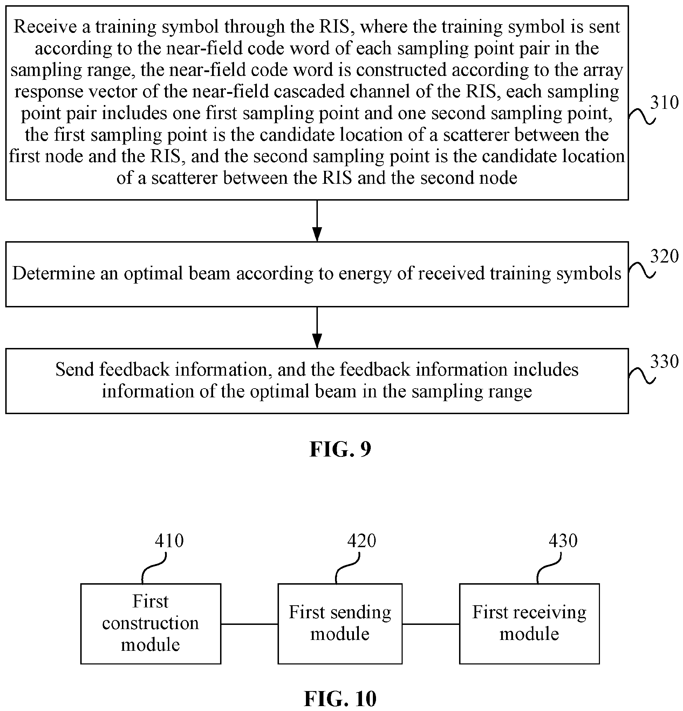

An embodiment of the present application provides a beam training method. FIG. 9 is a flowchart of another beam training method according to an embodiment. As shown in FIG. 9, the method may be applied to the second node, such as a user equipment. The method provided in this embodiment includes 310 to 330.

In 310, a training symbol is received through the RIS. The training symbol is sent according to the near-field code word of each sampling point pair in the sampling range. The near-field code word is constructed according to the array response vector of the near-field cascaded channel of the RIS. Each sampling point pair includes one first sampling point and one second sampling point. The first sampling point is the candidate location of a scatterer between the first node and the RIS. The second sampling point is the candidate location of a scatterer between the RIS and the second node.

In 320, an optimal beam is determined according to the received energy of the training symbol.

In 330, feedback information is sent. The feedback information includes information of the optimal beam in the sampling range.

In this embodiment, the second node receives the training symbol through the RIS first. The training symbol is sent by the first node through the RIS according to the near-field code word of each sampling point pair in the sampling range. Then, the second node determines the optimal beam according to the received energy of training symbols, that is, the near-field code word corresponding to a training symbol having the highest energy is selected and used as the optimal beam. Finally, the second node sends the feedback information to the base station through the RIS. The feedback information includes the information of the optimal beam obtained in the sampling range.

In an embodiment, operation 320 includes the following.

In 3210, the near-field code word corresponding to a training symbol having the maximum received energy is used as the optimal beam.

In this embodiment, in the process in which the second node determines the optimal beam according to the received energy of the training symbols, the near-field code word corresponding to the training symbol having the maximum received energy is used as the optimal beam. For example, in the process in which the second node receives the training symbols, the near-field code word corresponding to the training symbol having the maximum energy is recorded. Each time a training symbol is received, the energy of the currently received training symbol is compared with the recorded maximum energy of the training symbol. If the energy of the currently received training symbol is greater than the currently recorded energy of the training symbol, the near-field code word corresponding to the currently received training symbol is selected and used as the current optimal beam, and the previously recorded near-field code word is replaced. Otherwise, the recorded near-field code word is kept unchanged to wait for the next determination.

An embodiment of the present application provides a beam training apparatus. FIG. 10 is a diagram illustrating the structure of a beam training apparatus according to an embodiment. As shown in FIG. 10, the beam training apparatus includes a first construction module 410, a first sending module 420, and a first receiving module 430.

The first construction module 410 is configured to construct a near-field code word of each sampling point pair according to an array response vector of a near-field cascaded channel of an RIS. Each sampling point pair includes one first sampling point and one second sampling point. The first sampling point is the candidate location of a scatterer between the first node and the RIS. The second sampling point is the candidate location of a scatterer between the RIS and the second node.

The first sending module 420 is configured to send a training symbol through the RIS according to the near-field code word of each sampling point pair.

The first receiving module 430 is configured to receive feedback information. The feedback information includes information of the optimal beam.

In the beam training apparatus of this embodiment, the first node constructs the near-field code word according to the array response vector of the near-field cascaded channel of the RIS. On this basis, the first node sends the training symbol to the second node through the RIS according to the near-field code word to obtain the feedback information and acquire the optimal beam. The near-field codebook matching the near-field channel model may be constructed according to the near-field code word to implement beam training based on the near-field codebook in the ultra-large-scale RIS-assisted near-field communication. Thus, the achievable rate of beam training in the system is improved, and the performance loss of beam training is reduced.

In an embodiment, the apparatus also includes a first codebook construction module.

The first codebook construction module is configured to construct a codebook according to the near-field code word of each sampling point pair. The codebook includes multiple non-repeated near-field code words.

In an embodiment, the apparatus also includes a first sampling point set determination module.

The first sampling point set determination module is configured to, before the near-field code word of each sampling point pair is constructed according to the array response vector of the near-field cascaded channel of the RIS, determine a first sampling point set and a second sampling point set. The first sampling point set includes multiple first sampling points. The second sampling point set includes multiple second sampling points.

In an embodiment, the first sampling point set determination module includes a first sampling unit.

The first sampling unit is configured to sample a sampling range according to a set sampling step size to obtain the first sampling point set and the second sampling point set.

In an embodiment, the near-field code word of each sampling point pair is associated with the sum of the distance between the first sampling point and the RIS and the distance between the second sampling point and the RIS.

In an embodiment, the first sending module 420 includes a first traversal unit.

The first traversal unit is configured to traverse the near-field code word of each sampling point pair, set the reflection coefficient of the RIS to the currently traversed near-field code word, and send the training symbol through the RIS based on the reflection coefficient.

The beam training apparatus provided in this embodiment belongs to the same concept as the beam training method provided in the preceding embodiments, and for the technical details not described in detail in this embodiment, reference is made to any preceding embodiment. Moreover, this embodiment has the same beneficial effects as the beam training method executed.

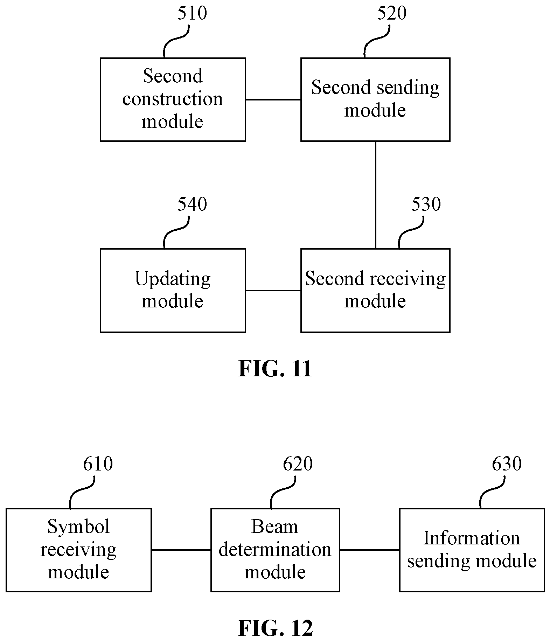

An embodiment of the present application provides a beam training apparatus. FIG. 11 is a diagram illustrating the structure of a beam training apparatus according to an embodiment. As shown in FIG. 11, the beam training apparatus includes a second construction module 510, a second sending module 520, a second receiving module 530, and an updating module 540.

The second construction module 510 is configured to, in the current search phase, construct a near-field code word of each sampling point pair according to an array response vector of a near-field cascaded channel of the RIS. Each sampling point pair includes one first sampling point and one second sampling point in the current sampling range. The first sampling point is the candidate location of a scatterer between the first node and the RIS. The second sampling point is the candidate location of a scatterer between the RIS and the second node.

The second sending module 520 is configured to send a training symbol through the RIS according to the near-field code word of each sampling point pair.

The second receiving module 530 is configured to receive feedback information. The feedback information includes information of the optimal beam in the current sampling range.

The updating module 540 is configured to update the current sampling range according to the information of the optimal beam, enter the next search phase, and return to perform the operation of constructing the near-field code word of each sampling point pair until the search stop condition of the optimal beam is satisfied.

In the beam training apparatus of this embodiment, through a grading near-field codebook and corresponding grading beam training, beam training overheads can be further reduced based on the near-field codebook.

In an embodiment, the updating module 540 includes a range set unit.

The range set unit is configured to set the current sampling range to be a range using the near-field code word corresponding to the optimal beam as the center and one half of the set sampling step size of the current search phase as each of the distances from the front and back boundaries to the center.

In an embodiment, the apparatus also includes a second sampling point set determination module.

The second sampling point set determination module is configured to, before the near-field code word of each sampling point pair is constructed according to the array response vector of the near-field cascaded channel of the RIS, determine a first sampling point set and a second sampling point set in the current sampling range. The first sampling point set includes multiple first sampling points. The second sampling point set includes multiple second sampling points.

In an embodiment, the second sampling point set determination module includes a second sampling unit.

The second sampling unit is configured to sample the current sampling range according to the set sampling step size of the current search phase to obtain the first sampling point set and the second sampling point set.

In an embodiment, the apparatus also includes a sampling step size determination module.

The sampling step size determination module is configured to, after the current sampling range is updated according to the information of the optimal beam and before it returns to performing the operation of constructing the near-field code word of each sampling point pair, reduce the set sampling step size of the current search phase according to a set proportion and use the reduced set sampling step size as the set sampling step size of the next search phase.

In an embodiment, the apparatus also includes a second codebook construction module.

A codebook corresponding to the current sampling range is constructed according to the near-field code word of each sampling point pair in the current sampling range.

The second codebook construction module is configured to construct a codebook corresponding to the current sampling range according to the near-field code word of each sampling point pair in the current sampling range.

In an embodiment, the near-field code word of each sampling point pair is associated with the sum of the distance between the first sampling point and the RIS and the distance between the second sampling point and the RIS in the current sampling range.

In an embodiment, the second sending module 520 includes a second traversal unit.

The second traversal unit is configured to traverse the near-field code word of each sampling point pair in the current sampling range, set the reflection coefficient of the RIS to the currently traversed near-field code word, and send the training symbol through the RIS based on the reflection coefficient.

The beam training apparatus provided in this embodiment belongs to the same concept as the beam training method provided in the preceding embodiments, and for the technical details not described in detail in this embodiment, reference is made to any preceding embodiment. Moreover, this embodiment has the same beneficial effects as the beam training method executed.

An embodiment of the present application provides a beam training apparatus. FIG. 12 is a diagram illustrating the structure of a beam training apparatus according to an embodiment. As shown in FIG. 12, the beam training apparatus includes a symbol receiving module 610, a beam determination module 620, and an information sending module 630.

The symbol receiving module 610 is configured to receive a training symbol through an RIS. The training symbol is sent according to the near-field code word of each sampling point pair in the sampling range. The near-field code word is constructed according to an array response vector of a near-field cascaded channel of the RIS. Each sampling point pair includes one first sampling point and one second sampling point. The first sampling point is the candidate location of the scatterer between the first node and the RIS. The second sampling point is the candidate location of the scatterer between the RIS and the second node.

The beam determination module 620 is configured to determine an optimal beam according to the received energy of the training symbol.

The information sending module 630 is configured to send feedback information. The feedback information includes information of the optimal beam in the sampling range.

In the beam training apparatus of this embodiment, the second node receives the training symbol sent by the first node, determines the optimal beam according to the received energy of the training symbol, and feeds back the information of the optimal beam to the first node through the RIS.

In an embodiment, the beam determination module 620 includes a beam determination unit.

The beam determination unit is configured to use the near-field code word corresponding to a training symbol having the maximum received energy as the optimal beam.

The beam training apparatus provided in this embodiment belongs to the same concept as the beam training method provided in the preceding embodiments, and for the technical details not described in detail in this embodiment, reference can be made to any preceding embodiment. Moreover, this embodiment has the same beneficial effects as the beam training method executed.

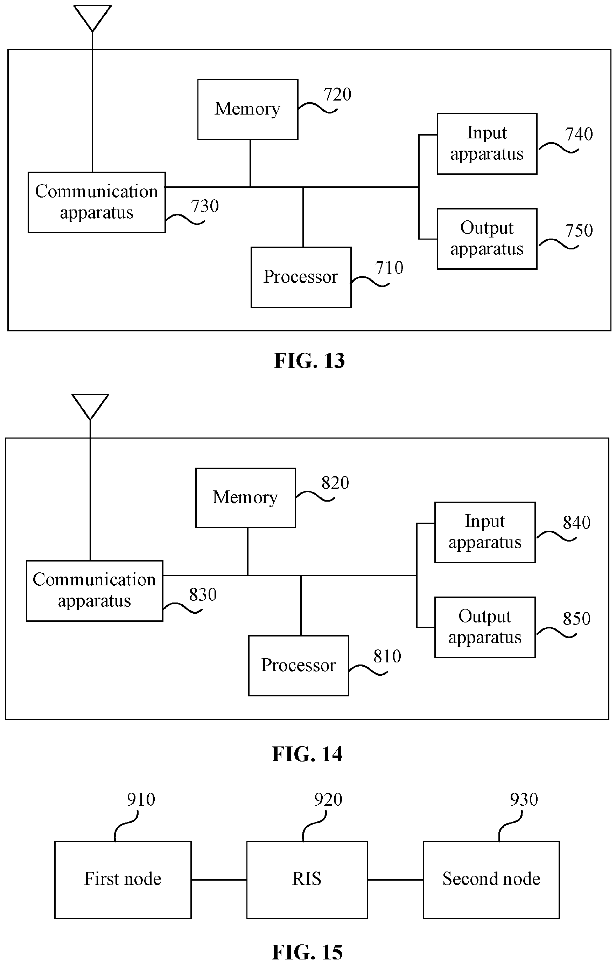

An embodiment of the present application provides a communication node. The communication node may be the first node. For example, the first node may be a base station, an access point, or a transmission point. FIG. 13 is a diagram illustrating the hardware structure of the first node according to an embodiment. As shown in FIG. 13, the first node provided by this embodiment includes a memory 720, a processor 710, and a computer program stored on the memory 720 and executable on the processor 710. When executing the program, the processor 710 performs the preceding beam training method.

The first node may also include the memory 720. There may be one or more processors 710 in the first node, and one processor 710 is used as an example in FIG. 13. The memory 720 is configured to store one or more programs. When executing the one or more programs, the one or more processors 710 perform the beam training method as described in the embodiments of the present application.

The first node also includes a communication apparatus 730, an input apparatus 740, and an output apparatus 750.

The processor 710, the memory 720, the communication apparatus 730, the input apparatus 740, and the output apparatus 750 in the first node may be connected via a bus or in other manners. The connection via a bus is used as an example in FIG. 13.

The input apparatus 740 may be configured to receive input digital or character information and generate key signal input related to user settings and function control of the first node. The output apparatus 750 may include a display screen and other display devices.

The communication apparatus 730 may include a receiver and a sender. The communication apparatus 730 is configured to perform information transceiving communication according to the control of the processor 710.

As a computer-readable storage medium, the memory 720 may be configured to store software programs and computer-executable programs and modules, such as program instructions/modules (such as the first construction module 410, the first sending module 420, and the first receiving module 430 in the beam training apparatus shown in FIG. 10; or the second construction module 510, the second sending module 520, the second receiving module 530, and the updating module 540 in the beam training apparatus shown in FIG. 11) corresponding to the beam training method in the embodiments of the present application. The memory 720 may include a program storage region and a data storage region. The program storage region may store an operating system and an application program required by at least one function; and the data storage region may store data created depending on the use of the first node. In addition, the memory 720 may include a high speed random-access memory and may also include a non-volatile memory, for example, at least one disk memory element, flash memory element, or another non-volatile solid-state memory element. In some embodiments, the memory 720 may further include memories that are remotely disposed relative to the processor 720. These remote memories may be connected to the first node through a network. Examples of the preceding network include, but are not limited to, the Internet, an intranet, a local area network, a mobile communication network and a combination thereof.

The embodiments of the present application further provide a communication node. The communication node may be the second node. For example, the second node may be the user equipment (UE). FIG. 14 is a diagram illustrating the hardware structure of the second node according to an embodiment. As shown in FIG. 14, the second node provided by this embodiment includes a memory 820, a processor 810, and a computer program stored on the memory 820 and executable on the processor 810. When executing the program, the processor 810 performs the preceding beam training method.

The second node may also include the memory 820. There may be one or more processors 810 in the second node, and one processor 810 is used as an example in FIG. 14. The memory 820 is configured to store one or more programs. When executing the one or more programs, the one or more processors 810 perform the beam training method as described in the embodiments of the present application.

The second node also includes a communication apparatus 830, an input apparatus 840, and an output apparatus 850.

The processor 810, the memory 820, the communication apparatus 830, the input apparatus 840, and the output apparatus 750 in the second node may be connected via a bus or in other manners. The connection via a bus is used as an example in FIG. 14.

The input apparatus 840 may be configured to receive input digital or character information and generate key signal input related to user settings and function control of the second node. The output apparatus 850 may include a display screen and other display devices.

The communication apparatus 830 may include a receiver and a sender. The communication apparatus 830 is configured to perform information transceiving communication according to the control of the processor 810.

As a computer-readable storage medium, the memory 820 may be configured to store software programs and computer-executable programs and modules, such as program instructions/modules (such as the symbol receiving module 610, the beam determination module 620, and the information sending module 630 in the beam training apparatus shown in FIG. 12) corresponding to the beam training method in the embodiments of the present application. The memory 820 may include a program storage region and a data storage region. The program storage region may store an operating system and an application program required by at least one function; and the data storage region may store data created depending on the use of the second node. In addition, the memory 820 may include a high speed random-access memory and may also include a non-volatile memory, for example, at least one disk memory element, flash memory element, or another non-volatile solid-state memory element. In some embodiments, the memory 820 may further include memories that are remotely disposed relative to the processor 810. These remote memories may be connected to the second node through a network. Examples of the preceding network include, but are not limited to, the Internet, an intranet, a local area network, a mobile communication network and a combination thereof.

The embodiments of the present application further provide a communication system. FIG. 15 is a diagram illustrating the structure of a communication system according to an embodiment. As shown in FIG. 15, the communication system includes an RIS 910, a first node 920, and a second node 930.

In this embodiment, the first node 920 constructs the near-field code word of each sampling point pair according to the array response vector of the near-field cascaded channel of the RIS 910 and sends the training symbol to the second node 930 through the RIS 910 according to the near-field code word of each sampling point pair. The second node 930 receives the training symbol through the RIS 910, determines the optimal beam according to the received energy of the training symbol, and uses the information of the optimal beam as the feedback information and sends the feedback information to the first node 920 through the RIS 910. The first node 920 receives the feedback information.

The communication system according to this embodiment may be configured to execute the beam training method according to any preceding embodiment and has corresponding functions and beneficial effects.

The embodiments of the present application further provide a computer-readable storage medium. The storage medium stores computer programs. When executing the computer program, a processor performs the beam training method described in any one of the embodiments of the present application. The beam training method includes the following: constructing the near-field code word of each sampling point pair according to the array response vector of the near-field cascaded channel of the RIS, where each sampling point pair includes one first sampling point and one second sampling point, the first sampling point is the candidate location of the scatterer between the first node and the RIS, and the second sampling point is the candidate location of the scatterer between the RIS and the second node; sending the training symbol through the RIS according to the near-field code word of each sampling point pair; and receiving the feedback information. The feedback information includes the information of the optimal beam. The beam training method includes the following: in the current search phase, constructing the near-field code word of each sampling point pair according to the array response vector of the near-field cascaded channel of the RIS, where each sampling point pair includes one first sampling point and one second sampling point in the current sampling range, the first sampling point is the candidate location of the scatterer between the first node and the RIS, and the second sampling point is the candidate location of the scatterer between the RIS and the second node; sending the training symbol through the RIS according to the near-field code word of each sampling point pair; receiving the feedback information, where the feedback information includes the information of the optimal beam in the current sampling range; and updating the current sampling range according to the information of the optimal beam and entering the next search phase, and returning to perform the operation of constructing the near-field code word of each sampling point pair until the search stop condition of the optimal beam is satisfied. The beam training method includes receiving the training symbol through the RIS, where the training symbol is sent according to the near-field code word of each sampling point pair in the sampling range, the near-field code word is constructed according to the array response vector of the near-field cascaded channel of the RIS, each sampling point pair includes one first sampling point and one second sampling point, the first sampling point is the candidate location of the scatterer between the first node and the RIS, and the second sampling point is the candidate location of the scatterer between the RIS and the second node; determining the optimal beam according to the received energy of the training symbol; and sending the feedback information. The feedback information includes the information of the optimal beam in the sampling range.

A computer storage medium in the embodiments of the present application may adopt any combination of one or more computer-readable media. The computer-readable media may be computer-readable signal media or computer-readable storage media. The one or more computer-readable storage media may be, but are not limited to, an electrical, magnetic, optical, electromagnetic, infrared or semiconductor system, apparatus or device, or any combination thereof. More specific examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable CD-ROM, an optical storage device, a magnetic storage device or any suitable combination thereof. The computer-readable storage medium may be any tangible medium including or storing a program. The program may be used by or used in conjunction with an instruction execution system, apparatus or device.

A computer-readable signal medium may include a data signal propagated in a baseband or as part of a carrier. Computer-readable program codes are carried in the data signal. The data signal propagated in this manner may be in multiple forms and includes, but is not limited to, an electromagnetic signal, an optical signal or any suitable combination thereof. The computer-readable signal medium may also be any computer-readable medium except the computer-readable storage medium. The computer-readable medium may send, propagate or transmit a program used by or used in conjunction with an instruction execution system, apparatus or device.

Program codes included in computer-readable media may be transmitted by using any suitable medium, including, but not limited to, a wireless medium, a wired medium, an optical cable, a radio frequency (RF) and the like or any suitable combination thereof.

Computer program codes for performing the operations of the present application may be written in one or more programming languages or a combination thereof, the programming languages including object-oriented programming languages such as Java, Smalltalk, and C++ and further including conventional procedural programming languages such as C programming language or similar programming languages. Program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

The above are only exemplary embodiments of the present application and are not intended to limit the scope of the present application.

It is to be understood by those skilled in the art that the term "user equipment" covers any suitable type of wireless user devices, for example, a mobile phone, a portable data processing apparatus, a portable web browser, or a vehicle-mounted mobile station.

In general, multiple embodiments of the present application may be implemented in hardware, a dedicated circuit, software, logic, or any combination thereof. For example, some aspects may be implemented in hardware while other aspects may be implemented in firmware or software that may be performed by a controller, a microprocessor, or other computing apparatuses, although the present application is not limited thereto.

The embodiments of the present application may be implemented with the arrangement in which a data processor of a mobile apparatus performs computer program instructions. The implementation, for example, may be in a processor entity or in hardware, or in a combination of software and hardware. The computer program instructions may be assembly instructions, instruction set architecture (ISA) instructions, machine instructions, machine-related instructions, microcodes, firmware instructions, state setting data, or source codes or object codes written in any combination of one or more programming languages.

The block views of any logic flow in the drawings of the present application may represent program steps, or may represent interconnected logic circuits, modules, and functions, or may represent a combination of program steps, logic circuits, modules, and functions. The computer program may be stored in a memory. The memory may be in any type suitable for the local technical environment and may be implemented using any suitable data storage technology, for example, but not limited to, a read-only memory (ROM), a random-access memory (RAM), and an optical memory apparatus and system (a digital video disc (DVD) or a compact disc (CD)). A computer-readable medium may include a non-transitory storage medium. The data processor may be in any type suitable for the local technical environment, for example, but not limited to, a general-purpose computer, a special-purpose computer, a microprocessor, a digital signal processing (DSP), an application-specific integrated circuit (ASIC), a field-programmable gate array (FGPA), and a processor based on a multi-core processor architecture.

**Claims**

1. A beam training method, comprising:

   constructing a near-field code word of each sampling point pair of a plurality of sampling point pairs according to an array response vector of a near-field cascaded channel of a reconfigurable intelligent surface, RIS, wherein each sampling point pair comprises one first sampling point and one second sampling point, the first sampling point is a candidate location of a scatterer between a first node and the RIS, and the second sampling point is a candidate location of a scatterer between the RIS and a second node;
   sending a training symbol through the RIS according to the near-field code word of each sampling point pair; and
   receiving feedback information, wherein the feedback information comprises information of an optimal beam.

2. The method according to claim 1, further comprising:
   constructing a codebook according to the near-field code word of each sampling point pair, wherein the codebook comprises a plurality of non-repeated near-field code words.

3. The method according to claim 1, wherein before constructing the near-field code word of each sampling point pair of the plurality of sampling point pairs according to the array response vector of the near-field cascaded channel of the RIS, the method further comprises:
   determining a first sampling point set and a second sampling point set, wherein the first sampling point set comprises a plurality of first sampling points, and the second sampling point set comprises a plurality of second sampling points.

4. The method according to claim 3, wherein determining the first sampling point set and the second sampling point set comprises:
   obtain the first sampling point set and the second sampling point set by sampling a sampling range according to a set sampling step size.

5. The method according to claim 1, wherein the near-field code word of each sampling point pair is associated with a sum of a distance between the first sampling point and the RIS and a distance between the second sampling point and the RIS.

6. The method according to claim 1, wherein sending the training symbol through the RIS according to the near-field code word of each sampling point pair comprises:
   traversing the near-field code word of each sampling point pair, setting a reflection coefficient of the RIS to a currently traversed near-field code word, and sending the training symbol through the RIS based on the reflection coefficient.

7. A beam training method, comprising:

   in a current search phase, constructing a near-field code word of each sampling point pair of a plurality of sampling point pairs according to an array response vector of a near-field cascaded channel of a reconfigurable intelligent surface, RIS, wherein each sampling point pair comprises one first sampling point and one second sampling point in a current sampling range, the first sampling point is a candidate location of a scatterer between a first node and the RIS, and the second sampling point is a candidate location of a scatterer between the RIS and a second node;
   sending a training symbol through the RIS according to the near-field code word of each sampling point pair;
   receiving feedback information, wherein the feedback information comprises information of an optimal beam in the current sampling range; and
   updating the current sampling range according to the information of the optimal beam and entering a next search phase, and returning to perform an operation of constructing the near-field code word of each sampling point pair of the plurality of sampling point pairs until a search stop condition of the optimal beam is satisfied.

8. The method according to claim 7, wherein updating the current sampling range according to the information of the optimal beam comprises:
   setting the current sampling range to a range using a near-field code word corresponding to the optimal beam as a center and one half of a set sampling step size of the current search phase as a distance from a front boundary of the range to the center and as a distance from a back boundary of the range to the center.

9. The method according to claim 7, wherein before constructing the near-field code word of each sampling point pair of the plurality of sampling point pairs according to the array response vector of the near-field cascaded channel of the RIS, the method further comprises:
   determining a first sampling point set and a second sampling point set in the current sampling range, wherein the first sampling point set comprises a plurality of first sampling points, and the second sampling point set comprises a plurality of second sampling points.

10. The method according to claim 9, wherein determining the first sampling point set and the second sampling point set in the current sampling range comprises:
    obtain the first sampling point set and the second sampling point set by sampling the current sampling range according to a set sampling step size of the current search phase.

11. The method according to claim 8, wherein after updating the current sampling range according to the information of the optimal beam and before returning to perform the operation of constructing the near-field code word of each sampling point pair of the plurality of sampling point pairs, the method further comprises:
    reducing the set sampling step size of the current search phase according to a set proportion and using the reduced set sampling step size as a set sampling step size of the next search phase.

12. The method according to claim 7, further comprising:
    constructing a codebook corresponding to the current sampling range according to the near-field code word of each sampling point pair in the current sampling range.

13. The method according to claim 7, wherein the near-field code word of each sampling point pair is associated with a sum of a distance between the first sampling point and the RIS and a distance between the second sampling point and the RIS in the current sampling range.

14. The method according to claim 7, wherein sending the training symbol through the RIS according to the near-field code word of each sampling point pair comprises:
    traversing the near-field code word of each sampling point pair in the current sampling range, setting a reflection coefficient of the RIS to a currently traversed near-field code word, and sending the training symbol through the RIS based on the reflection coefficient.

15. A beam training method, comprising:

    receiving a training symbol through a reconfigurable intelligent surface, RIS, wherein the training symbol is sent according to a near-field code word of each sampling point pair of a plurality of sampling point pairs in a sampling range, the near-field code word is constructed according to an array response vector of a near-field cascaded channel of the RIS, each sampling point pair comprises one first sampling point and one second sampling point, the first sampling point is a candidate location of a scatterer between a first node and the RIS, and the second sampling point is a candidate location of a scatterer between the RIS and a second node;
determining an optimal beam according to received energy of the training symbol; and
sending feedback information, wherein the feedback information comprises information of the optimal beam in the sampling range.

16. The method according to claim 15, wherein determining the optimal beam according to the received energy of the training symbol comprises:
using a near-field code word corresponding to a training symbol having maximum received energy as the optimal beam.

17. A first node, comprising a memory, a processor, and a computer program stored on the memory and executable on the processor, wherein when executing the program, the processor performs the beam training method according to any one of claims 1 to 14.

18. A second node, comprising a memory, a processor, and a computer program stored on the memory and executable on the processor, wherein when executing the program, the processor performs the beam training method according to any one of claims 15 to 16.

19. A communication system, comprising a reconfigurable intelligent surface, RIS, the first node according to claim 17, and the second node according to claim 18.

20. A computer-readable storage medium storing a computer program, wherein the computer program, when executed by a processor, causes the processor to perform the beam training method according to any one of claims 1 to 16.

Construct a near-field code word of each sampling point pair according to an array response vector of a near-field cascaded channel of an RIS, where each sampling point pair includes one first sampling point and one second sampling point, the first sampling point is a candidate location of a scatterer between a first node and the RIS, and the second sampling point is the candidate location of a scatterer between the RIS and a second node ~ 110

Send a training symbol through the RIS according to the near-field code word of each sampling point pair ~ 120

Receive feedback information, the feedback information includes the information of an optimal beam ~ 130

**FIG. 1**

**FIG. 2**

In a three-dimensional coordinate system, sample the entire sampling range considered according to a certain sampling step size to generate two sampling point sets respectively corresponding to the candidate location of the scatterer between a base station and an ultra-large-scale RIS and the candidate location of the scatterer between the ultra-large-scale RIS and a user — A1

Take a sampling point from each of the two sampling point sets to form one sampling point pair, and construct the near-field code word of each sampling point pair according to the array response vector of the near-field cascaded channel of the ultra-large-scale RIS, and each near-field code word depends on the sum of distances from the two sampling points to the ultra-large-scale RIS — A2

Determine whether the currently newly constructed near-field code word is not in the current codebook — A3

No → Skip — A5

Yes ↓

Place the currently constructed near-field code word in the current codebook — A4

Determine whether all sampling point pairs of the two sampling point sets are traversed — A6

No ←

Yes ↓

Construct a near-field codebook according to the near-field code word of each sampling point pair — A7

Perform a traversal search on the near-field codebook generated, in an $l^{th}$ search, set the reflection coefficient of the ultra-large-scale RIS to an $l^{th}$ code word in the near-field codebook, and send the training symbol by the base station to the user through the ultra-large-scale RIS — A8

Receive the training symbol by the user and record the near-field code word corresponding to the training symbol having the maximum energy in currently received training symbols — A9

Determine whether all the near-field code words in the near-field codebook are traversed and searched — A10

No ←

Yes ↓

Obtain an optimal near-field code word by the user side, and feed back an optimal code word subscript to the base station through the ultra-large-scale RIS by the user side — A11

**FIG. 3**

In the current search phase, construct the near-field code word of each sampling point pair according to the array response vector of the near-field cascaded channel of the RIS, where each sampling point pair includes one first sampling point and one second sampling point in the current sampling range, the first sampling point is the candidate location of a scatterer between the first node and the RIS, and the second sampling point is the candidate location of a scatterer between the RIS and the second node    210

Send a training symbol through the RIS according to the near-field code word of each sampling point pair    220

Receive feedback information, where the feedback information includes information of the optimal beam in the current sampling range    230

Update the current sampling range according to the information of the optimal beam and enter the next search phase, and return to perform the operation of constructing the near-field code word of each sampling point pair until the search stop condition of the optimal beam is satisfied    240

**FIG. 4**

Near-field codebook

First grade

Sampling range

Second grade

Set sampling step size

Grading near-field codebook

$k^{th}$ grade

**FIG. 5**

**FIG. 6**

FIG. 7

Divide the entire beam training process into $K$ grades of search phases (corresponding to $K$ grades of sub-codebooks) and initialize a sampling range and a set sampling step size — B1

In a $k^{th}$ search phase, generate two sampling point sets according to the current sampling range and the set sampling step size — B2

Construct and generate a $k^{th}$ grade sub-codebook according to the method described in A2-A7 of the preceding embodiment — B3

Obtain the optimal near-field code word corresponding to the $k^{th}$ grade sub-codebook according to the method described in A8-A11 of the preceding embodiment — B4

Update the current sampling range according to the optimal near-field code word corresponding to the obtained $k^{th}$ grade sub-codebook, that is, the current sampling range becomes to be centered on the current optimal near-field code word, and the distances from the front and rear boundaries to the center are each one half of the current set sampling step size — B5

Update the current set sampling step size to $\delta$ times the original one, $0 < \delta < 1$ — B6

Determine whether the $K$ grades of search phases are fully completed — B7

No

Yes

Obtain the optimal near-field code word from the $k^{th}$ grade sub-codebook by the user side, and feed back the optimal code word subscript to the base station through the RIS by the user — B8

**FIG. 8**

Receive a training symbol through the RIS, where the training symbol is sent according to the near-field code word of each sampling point pair in the sampling range, the near-field code word is constructed according to the array response vector of the near-field cascaded channel of the RIS, each sampling point pair includes one first sampling point and one second sampling point, the first sampling point is the candidate location of a scatterer between the first node and the RIS, and the second sampling point is the candidate location of a scatterer between the RIS and the second node

310

Determine an optimal beam according to energy of received training symbols

320

Send feedback information, and the feedback information includes information of the optimal beam in the sampling range

330

**FIG. 9**

410    420    430

| First construction module | First sending module | First receiving module |

**FIG. 10**

510

520

| Second construction module | Second sending module |
|---|---|

540

530

| Updating module | Second receiving module |
|---|---|

**FIG. 11**

610

620

630

| Symbol receiving module | Beam determination module | Information sending module |
|---|---|---|

**FIG. 12**

FIG. 13

FIG. 14

FIG. 15

**INTERNATIONAL SEARCH REPORT**

International application No.

**PCT/CN2022/113557**

**A.    CLASSIFICATION OF SUBJECT MATTER**

H04B 7/06(2006.01)i

According to International Patent Classification (IPC) or to both national classification and IPC

**B.    FIELDS SEARCHED**

Minimum documentation searched (classification system followed by classification symbols)

H04B7/-;H01Q3/-;H04B17/-;H04L25/-

Documentation searched other than minimum documentation to the extent that such documents are included in the fields searched

Electronic data base consulted during the international search (name of data base and, where practicable, search terms used)

CNTXT; CNABS; CJFD; CNKI; 万方, WANFANG: beam, 采样, 组, 智能超表面, IRS, 可重配智能表面, 集合, 最优, 近场, 信道, 采样点, 成形, 符号, 形成, 训练, 测试, 测量, 可重构智能表面, 波束, 最好, 赋型, 学习, 成型, 码字, 智能反射表面, RIS, 天线, 最佳; WPABS; IEEE; ENTXT: beam, sample, group, reconfigurable intelligent surfaces, IRS, set, optimal, near-field, channel, forming, symbol, train, test, measure, best, learn, RIS, antenna

**C.    DOCUMENTS CONSIDERED TO BE RELEVANT**

| Category* | Citation of document, with indication, where appropriate, of the relevant passages | Relevant to claim No. |
|---|---|---|
| A | CN 113179232 A (NANTONG UNIVERSITY; NANTONG RESEARCH INSTITUTE FOR ADVANCED COMMUNICATION TECHNOLOGIES CO., LTD.) 27 July 2021 (2021-07-27)<br>     entire document | 1-20 |
| A | CN 112887002 A (ZHEJIANG LAB; SOUTHEAST UNIVERSITY) 01 June 2021 (2021-06-01)<br>     entire document | 1-20 |
| A | CN 111917448 A (SHENZHEN UNIVERSITY) 10 November 2020 (2020-11-10)<br>     entire document | 1-20 |
| A | CN 112564752 A (XIDIAN UNIVERSITY) 26 March 2021 (2021-03-26)<br>     entire document | 1-20 |
| A | CN 111245492 A (BEIJING UNIVERSITY OF POSTS AND TELECOMMUNICATIONS) 05 June 2020 (2020-06-05)<br>     entire document | 1-20 |

☑ Further documents are listed in the continuation of Box C.          ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **17 November 2022** | **25 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/113557** |

**C.    DOCUMENTS CONSIDERED TO BE RELEVANT**

| Category* | Citation of document, with indication, where appropriate, of the relevant passages | Relevant to claim No. |
|---|---|---|
| A | CN 113765581 A (BEIJING INSTITUTE OF TECHNOLOGY) 07 December 2021 (2021-12-07)<br>        entire document | 1-20 |
| A | CN 113489553 A (SOUTHEAST UNIVERSITY) 08 October 2021 (2021-10-08)<br>        entire document | 1-20 |
| A | Mohamed A. ElMossallamy, Hongliang Zhang, Lingyang Song, Karim G. Seddik, Zhu Han, Geoffrey Ye Li. "Reconfigurable Intelligent Surfaces for Wireless Communications: Principles, Challenges, and Opportunities"<br>*IEEE TRANSACTIONS ON COGNITIVE COMMUNICATIONS AND NETWORKING,*<br>Vol. 6, No. 3, 30 September 2020 (2020-09-30),<br>        entire document | 1-20 |

Form PCT/ISA/210 (second sheet) (January 2015)

INTERNATIONAL SEARCH REPORT
Information on patent family members

International application No.

**PCT/CN2022/113557**

| Patent document cited in search report | | | Publication date (day/month/year) | Patent family member(s) | | | Publication date (day/month/year) |
|---|---|---|---|---|---|---|---|
| CN | 113179232 | A | 27 July 2021 | CN | 113179232 | B | 26 October 2021 |
| CN | 112887002 | A | 01 June 2021 | CN | 112887002 | B | 05 August 2022 |
| CN | 111917448 | A | 10 November 2020 | CN | 111917448 | B | 05 August 2022 |
| CN | 112564752 | A | 26 March 2021 | None | | | |
| CN | 111245492 | A | 05 June 2020 | CN | 111245492 | B | 21 January 2022 |
| CN | 113765581 | A | 07 December 2021 | None | | | |
| CN | 113489553 | A | 08 October 2021 | CN | 113489553 | B | 05 July 2022 |

Form PCT/ISA/210 (patent family annex) (January 2015)